# EUROPÄISCHE PATENTSCHRIFT

(11) **EP 0 696 599 B1**
(45) Veröffentlichungstag und Bekanntmachung des Hinweises auf die Patenterteilung: **01.12.1999**
(21) Anmeldenummer: 95112566.5
(22) Anmeldetag: 10.08.1995
(51) Int. Cl.: C08B 37/16, C11D 3/22, D06M 15/03

(54) **Wasserlösliche Cyclodextrinderivate mit lipophilen Substituenten und Verfahren zu ihrer Herstellung**
Water-soluble cyclodextrin derivatives having lipophilic substituents and process for preparing them
Dérivés de cyclodextrines solubles dans l'eau contenant des substituants lipophiles et procédé pour leur préparation

(30) Priorität: 12.08.1994 DE 4428654
(43) Veröffentlichungstag der Anmeldung: 14.02.1996
(73) Patentinhaber: Consortium für Elektrochemische Industrie GmbH, 81379 München (DE)
(72) Erfinder: Krüger, Benno, Dr., D-81369 München (DE); Delica, Sabine, D-81673 München (DE); Seyschab, Karl, D-85737 Ismaning (DE)
(74) Vertreter: Potten, Holger

(56) Entgegenhaltungen:
- EP-A- 0 146 841
- DE-A- 3 710 569
- GB-A- 699 530
- US-A- 3 061 444
- DATABASE WPI Week 9217 Derwent Publications Ltd., London, GB; AN 138444 & JP-A-04 081 403 (KAO CORP) , 16.März 1992
- TETRAHEDRON LETTERS, Bd. 27, Nr. 23, 1986 Seiten 2579-2582, F.M. MANGER ET AL. 'Synthesis and properties of Surfactant-Cyclodextrin Conjugate.'

## Beschreibung

Die Erfindung betrifft wasserlösliche Cyclodextrinderivate mit lipophilen Substituenten und Verfahren zu ihrer Herstellung.

Im Sinne der vorliegenden Erfindung ist unter Wasserlöslichkeit zu verstehen, daß das Produkt bei 20°C zu mindestens 10 Gew.% in Wasser gelöst ist.

GB-A-699 530 offenbart die Herstellung von Schaummitteln aus gemischten Stärkeethern mit hydrophilen und hydrophoben Substituenten.

Aus US-A-3061444 ist bekannt, daß acylische Dextrine, wie auch cyclische Dextrine, mit Bestandteilen von Fruchsäften Einschlußkomplexe bilden.

Die Erhöhung der Wasserlöslichkeit von Cyclodextrinderivaten und Cyclodextrinkomplexen durch Einführung von Hydroxyalkyl-, Dihydroxyalkyl- oder Carboxymethylgruppen ist Stand der Technik und wird z.B. im Pharmabereich auf Wirkstoffkomplexe angewandt. Mischether mit kurzkettigen hydrophilen Substituenten zeigen den gleichen Effekt.

J. Pitha, L. Szabo und H.M. Fales, Carbohydr. Res. 1987, 168, 191 beschreiben die Umsetzung von Cyclodextrinen mit Propenoxid oder 3-Hydroxypropenoxid in wäßriger Base. Dies führt zu sehr gut wasserlöslichen Derivaten mit einer relativ scharfen und symmetrischen Substituentenverteilung.

WO 9200331 beschreibt die Herstellung von hydroxyalkylierten Cyclodextrinderivaten durch Reaktion von Cyclodextrin mit niederen Epoxiden und deren weitere Umsetzung zu Aminoderivaten.

EP 499322 A1 beschreibt die Herstellung und potentielle Anwendung hydroxyalkylierter Cyclodextrinderivate, die zusätzliche Carboxyalkylgruppen enthalten.

EP 146841 A2 beschreibt die Herstellung wasserlöslicher Mischether des β-Cyclodextrins durch Reaktion mit niederen Epoxiden (C1-C4).

Die oberflächenaktiven Eigenschaften der bisher bekannten wasserlöslichen Cyclodextrinderivate sind gering im Vergleich zu gebräuchlichen Tensiden.

Der Einsatz von wasserlöslichen Cyclodextrinen und Cyclodextrinderivaten in Detergenslösungen ist durch Komplexierung der oberflächenaktiven Substanzen erschwert und nur eingeschränkt möglich. Eine Reihe oberflächenaktiver Cyclodextrinderivate sind in der Literatur beschrieben, wobei schon Methyl- oder Hydroxypropylsubstituenten am Cyclodextrin Einflüsse auf die oberflächenaktiven Eigenschaften der Derivate zeigen.

U.R. Dharmawardana, S.D. Christian, E.E. Tucker, R.W. Taylor und J.F. Scamehorn, Langnuir 1993, 9, 2258 beschreiben, daß Cyclodextrine und Cyclodextrinderivate die Oberflächenspannung und die kritische Micellenkonzentration von Detergenslösungen durch die Bildung von Einschlußkomplexen mit den Detergentien erhöhen.

T. Cserhati und J. Szejtli, Tenside Deterg., 1985, 22, 237 beschreiben, daß methylierte β-Cyclodextrine eine nachweisbare Oberflächenaktivität besitzen und zu einer Absenkung der Oberflächenspannung in wäßriger Lösung führen.

F.M. Menger und D.Y. Williams, Tetrahedron Lett. 1986, 27, 2579 offenbaren, daß wasserunlösliche Cyclodextrinderivate mit längerkettigen Alkylsubstituenten Oberflächenaktivität ohne Auftreten einer kritischen Micellenkonzentration zeigen.

Lipophil substituierte Cyclodextrinderivate, die starke oberflächenaktive Eigenschaften aufweisen, besitzen in der Regel nur eine Wasserlöslichkeit von deutlich weniger als 10%.

In DE 40 35 378 (entspricht CA 117:113485) wird die Möglichkeit beschrieben, textile Materialien durch Ausrüstung mit Cyclodextrinderivaten zu veredeln. Zur Fixierung von Cyclodextrin an hydrophoben Materialien werden Ankergruppen wie längerkettige Alkylreste, Arylreste oder Alkylarylreste vorgeschlagen, die eine überwiegend physikalische Bindung über van der Waals'sche Wechselwirkungen bewirken.

Die zur Stoff- und Faserveredelung von hydrophoben Materialien vorgeschlagenen Cyclodextrinderivate mit ausgedehnten hydrophoben Ankern sollten aus technischen und finanziellen Gründen (Textilveredelungsprozesse werden in der Regel in wäßrigem Medium durchgeführt) eine ausreichende Wasserlöslichkeit haben, um auf Hilfsstoffe (z.B. Dispersionsmittel etc.) weitgehend verzichten zu können.

Cyclodextrinderivate, die über eine hohe Oberflächenaktivität verfügen, könnten den Einsatz dieser Hilfsstoffe vollständig überflüssig machen.

Gegenstand der Erfindung sind wasserlösliche Mischether des α, β, oder γ-Cyclodextrins mit mindestens einem lipophilen und einem hydrophilen Rest pro Cyclodextrinmolekül, der folgenden Formel: 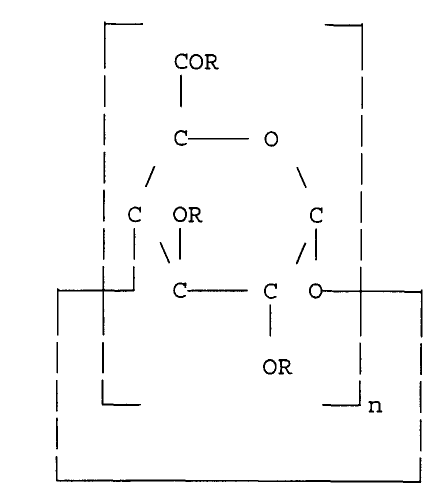 wobei R Wasserstoff oder R1 oder R2 bedeutet und
R1 gleich oder verschieden ist und Methyl, Ethyl, Hydroxyethyl, Hydroxy-i-propyl, Hydroxy-n-propyl, Dihydroxy-i-propyl, Dihydroxy-n-propyl, Carboxymethyl, Carboxyethyl, Carboxy-i-propyl, Carboxy-n-propyl oder ein Alkalisalz der Carboxyalkylsubstituenten bedeutet und R2 gleich oder verschieden ist und C₅-C₁₂ Hydroxyalkyl, C₆-C₁₀ Hydroxycycloalkyl, mit C₄-C₁₂ Alkyloxy, und/oder C₆-C₁₀ Aryloxy, und/oder C₇-C₁₅ Aralkyloxyresten substituiertes Hydroxypropyl bedeutet, wobei die Alkylreste unverzweigt oder verzweigt sein können
und der MS für R1 0,3 bis 1,0 beträgt und
der MS für R2 0,2 bis 0,6 beträgt und
n 6, 7 oder 8 bedeutet.

Besonders bevorzugt ist R1 gleich oder verschieden und bedeutet Methyl, 2-Hydroxypropyl, 2,3-Dihydroxypropyl, Na-Carboxymethyl, K-Carboxymethyl, Li-Carboxymethyl, und R2 Hydroxyhexyl, Hydroxyoctyl, Hydroxydecyl, Hydroxycyclohexyl, Hydroxycyclooctyl, 3-Butoxy-hydroxypropyl, 3-Hexyloxyhydroxypropyl, 3-(2-Ethylhexyloxy)-hydroxypropyl, 3-octyloxy-hydroxypropyl, 3-Phenyloxy-hydroxypropyl, 3-Kresyloxyhydroxypropyl, 3-Naphthyloxy-hydroxypropyl, wobei die Alkylreste unverzweigt und geradzahlig sind.

Der MS für R1 ist bevorzugt 0,4 bis 0,6.

Der MS für R2 ist bevorzugt 0,3 bis 0,5.

n ist vorzugsweise 7.

Der "MS" ist der molare Substitutionsgrad, d.h. die mittlere Anzahl von Molen des substituierten Reagens, die pro Mol Anhydroglucose-Einheit etherartig gebunden wurden.

Im Unterschied zu bekannten Cyclodextrinderivaten mit lipophilen Substituenten, welche in Wasser schwerlöslich bis unlöslich sind, lassen sich von den erfindungsgemäßen Cyclodextrinderivaten wässrige Lösungen mit einem Gehalt von zum Teil über 30 Gew.% erfindungsgemäßes Cyclodextrinderivat herstellen. Von den bevorzugten erfindungsgemäßen Derivaten lassen sich Lösungen mit einem Cyclodextrin Gehalt von zum Teil über 50 Gew.% herstellen. Im Unterschied zu bekannten wasserlöslichen Cyclodextrinderivaten zeigen die erfindungsgemäßen Derivate eine hohe Oberflächenaktivität. So liegt beispielsweise die Oberflächenspannung der erfindungsgemäßen Derivate deutlich unterhalb der Oberflächenspannung von bekannten wasserlöslichen Cyclodextrinderivaten.

Die Erfindung betrifft ferner Verfahren, zur Herstellung von Cyclodextrinderivaten gemäß Formel I.

Bei dem erfindungsgemäßen Verfahren wird α-, β- oder γ-Cyclodextrin einzeln oder in beliebiger Mischung in einem basischen flüssigen Reaktionsmedium mit mindestens einem Veretherungsmittel, welches zu lipophilen Substituenten am Cyclodextrin führt, und mindestens einem Veretherungsmittel, welches zu hydrophilen Substituenten am Cyclodextrin führt, umgesetzt.

Als Variante des erfindungsgemäßen Verfahrens ist es ebenso möglich, ein hydrophiles Cyclodextrinderivat mit einem Veretherungsmittel, welches zu lipophilen Substituenten am Cyclodextrin führt, umzusetzen.

Im erfindungsgemäßen Verfahren sind α-, β- und/oder γ-Cyclodextrine, wie sie käuflich erhältlich sind, einsetzbar. Die Cyclodextrine können jedoch ebenso in an sich bekannter Weise, beispielsweise durch enzymatische Umsetzung von Stärke mit Cyclodextrin Glycosyltransferase (CGTase E.C.2.4.1.19), hergestellt werden. In der o.g. Verfahrensvariante sind teilsubstituierte Cyclodextrinderivate wie z.B. Cyclodextrinether und -ester einsetzbar. Beispiele für solche Derivate sind teilsubstituierte Hydroxyalkylcyclodextrine wie Hydroxypropylcyclodextrin oder Dihydroxypropylcyclodextrin, teilsubstituierte Carboxyalkylcyclodextrine wie Carboxymethylcyclodextrin, Alkalimetallsalze von teilsubstituierten Carboxyalkylcyclodextrinen oder teilsubstituierte wasserlösliche Alkylcyclodextrine wie C₁ bis C₄ Alkylcyclodextrine.

Bevorzugt werden im erfindungsgemäßen Verfahren α-, βund/oder γ-Cyclodextrin, bzw. in der Verfahrensvariante Hydroxypropylcyclodextrin, Dihydroxypropylcyclodextrin, Na-Carboxymethylcyclodextrin oder teilsubstituiertes Methylcyclodextrin eingesetzt.

Die Cyclodextrine können in handelsüblicher Qualität mit einem Wassergehalt vorzugsweise zwischen 0 und 15 Gew.% eingesetzt werden. Sie müssen keinen besonderen Anforderungen bezüglich Reinheit genügen. Aus Kostengründen besonders bevorzugt werden Cyclodextrine oder Cyclodextrinderivate mit einem Wassergehalt von in der Regel 10 bis 15 Gew.% eingesetzt, wie sie handelsüblich erhältlich sind.

Als Veretherungsmittel, die zu lipophilen Substituenten am Cyclodextrin führen, werden vorzugsweise verzweigte oder unverzweigte C₄-C₁₂ Alkylepoxide wie beispielsweise 1-Hexenoxid, 1-Octenoxid, 1-Decenoxid, cyclische C₆-C₁₀ Epoxide wie beispielsweise Cyclohexenoxid oder Cyclooctenoxid oder verzweigte oder unverzweigte C₄-C₁₂ Alkyl-Glycidether wie n-Butylglycidether, n-Hexylglycidether, n-Octylglycidether, 2-Ethylhexylglycidether oder C₆-C₁₅ Aryl oder Aralkylglycidether wie Phenylglycidether, Kresylglycidether oder Mischungen der genannten Substanzen eingesetzt.

Besonders bevorzugt werden 1-Hexenoxid, 1-Octenoxid, 1-Decenoxid, Cyclohexenoxid, Cyclooctenoxid, n-Butylglycidether, n-Hexylglycidether, n-Octylglycidether, 2-Ethylhexylglycidether, Phenylglycidether oder Kresylglycidether eingesetzt.

Als Veretherungsmittel, die zu hydrophilen Substituenten am Cyclodextrin führen werden, vorzugsweise C₂-C₃ Alkylepoxide, C₃-C₄ Hydroxyalkyiepoxide, Methylhalogenide, Ethylhalogenide, Halogencarbonsäuren mit ein oder 2 C-Atomen oder Alkalisalze von Halogencarbonsäuren mit 2 oder 3 C-Atomen oder Mischungen der genannten Substanzen eingesetzt.

Besonders bevorzugt werden Ethylenoxid, Propylenoxid, Hydroxypropenoxid, Chloressigsäure oder deren Na-Salz, oder Methylchlorid eingesetzt.

Die Veretherungsmittel werden in handelsüblicher Reinheit eingesetzt.

Als basisches flüssiges Reaktionsmedium wird vorzugsweise eine 1 bis 50 % ige Alkalihydroxidlösung beispielsweise eine Natriumhydroxid-, Kaliumhydroxid- oder Lithiumhydroxidlösung eingesetzt.

Vorzugsweise wird eine 2 bis 15 %ige Natriumhydroxidlösung eingesetzt.

Ggf. kann noch mindestens ein organisches Lösungsmittel wie beispielsweise Methanol, Ethanol, Isopropanol oder THF in Mengen bis zu 30% im Reaktionsmedium vorhanden sein.

Erfindungsgemäß wird vorzugsweise zuerst das Cyclodextrin (gegebenenfalls in Anwesenheit eines organischen Lösungsmittels) in das Gemisch aus Wasser und Alkalimetallhydroxid eingemischt, wonach die Zugabe der Veretherungsmittel in einer oder mehreren Stufen erfolgt. Das Verfahren der Mischetherbildung kann also einstufig in Anwesenheit von mindestens zwei unterschiedlichen Veretherungsmitteln durchgeführt werden. Es kann jedoch auch zweistufig in Anwesenheit von einem Veretherungsmittel pro Stufe durchgeführt werden.

Bei einer zweistufigen Durchführung der Veretherungsreaktion kann (je nach Reaktivität des zweiten Alkylierungsmittels) eine Veränderung der Basenkonzentration durch Zugabe von Alkalihydroxid oder teilweise Neutralisation des Reaktionsgemisches vor Zugabe des zweiten Veretherungsreagenzes erreicht werden.

Vorzugsweise werden bei einer Umsetzung von Cyclodextrin mit mindestens 2 verschiedenen Veretherungsmitteln pro Mol Cyclodextrin 1 - 30 mol, bevorzugt 2 - 20 mol, besonders bevorzugt 3 - 10 mol, des Veretherungsmittels, welches hydrophile Substituenten am Cyclodextrin einführt und 1-20 mol, bevorzugt 1,5 - 10 mol, besonders bevorzugt 1,5 - 8 mol, des Veretherungsmittels, welches lipophile Substituenten am Cyclodextrin einführt, eingesetzt.

Vorzugsweise werden Cyclodextrin und Reaktionsmedium in einem Mengenverhältnis Cyclodextrin/Reaktionsmedium von 1:0,7 bis 1:10, vorzugsweise etwa 1:1 bis 1:5 eingesetzt, wobei diese Angaben auch die dem basischen Reaktionsmedium ggf. zugesetzten organischen Lösungsmittel mitumfassen.

Zur Durchführung einer Variante des erfindungsgemäßen Verfahrens wird ein alkyliertes wasserlösliches Cyclodextrinderivat in das Gemisch aus Wasser und Alkalimetallhydroxid gegeben und danach das zweite Veretherungsmittel vorzugsweise in einem Molverhältnis Cyclodextrinderivat/Veretherungsmittel von 1:1 bis 1:20 besonders bevorzugt 1:1,5 bis 1:8 zugegeben.

Die jeweiligen Reaktionsgemische und -gefäße können mit Inertgasen wie Stickstoff gespült werden, um oxidative Nebenreaktionen zu verhindern.

Die Reaktion verläuft in Lösung oder in Suspension, vorzugsweise in Lösung. Die Umsetzung verläuft bei der Einführung von hydrophilen und lipophilen Substituenten in Cyclodextrin besonders erfolgreich bei einer Temperatur zwischen 0 und 120°C, vorzugsweise 20 und 100°C je nach Reaktivität und Flüchtigkeit des verwendeten Veretherungsmittels bzw. bei Einführung eines lipophilen Substituenten bei 40 bis 120°C vorzugsweise 60 bis 120°C.

Die für die Veretherungsreaktion erforderliche Zeit liegt - je nach Reaktionstemperatur - im allgemeinen zwischen 2 und 15 h.

Anschließend wird (bevorzugt nach Zugabe von anorganischer wäßriger Säure bis zur Neutralisation der noch unverbrauchten Basen) der Ansatz 1-24 h bei 20-30°C gerührt. Danach werden gegebenenfalls unlösliche Nebenprodukte mittels einer Trennvorrichtung (z.B. Zentrifuge, Filtereinrichtung) abgetrennt und der Ansatz vom Hauptteil der flüssigen Komponenten (beispielsweise mittels einer Destillationsapparatur oder eines Dialysators) befreit.

Eine Aufreinigung der so erhaltenen erfindungsgemäßen Cyclodextrinderivate kann, wie aus dem Stand der Technik bekannt, erfolgen. Beispielsweise wird dazu die konzentrierte wäßrige Lösung in etwa die zehnfache Menge bezogen auf das Volumen der Wasserphase eines organischen Lösungsmittels getropft. Das ausgefällte Produkt wird abfiltriert oder zentrifugiert (beispielsweise 10 min bei 10 g) und anschließend getrocknet. Der getrocknete Niederschlag wird gelöst. Als Lösungsmittel läßt sich z.B. Wasser verwenden.

Die Aufreinigung der Produkte kann ebenso nach anderen, für die Aufreinigung von Cyclodextrin oder Cyclodextrinderivaten bekannten Methoden erfolgen. Beispiele für solche Methoden sind direkte Kristallisation, Aktivkohle-Adsorption, Ionenaustauscherchromatographie oder Gelpermeationschromatographie.

Eine weitere Aufreinigung der erfindungsgemäß erhaltenen Cyclodextrinderivate kann, wie ebenfalls aus dem Stand der Technik bekannt, beispielsweise durch Säulenchromatographie oder präparative HPLC oder Dialyse (z.B. Dialyseschläuche benzoylierte Cellulose, Fa. Sigma, D-8024 Deisenhofen) erfolgen.

Die erfindungsgemäßen Cyclodextrinderivate eignen sich für alle bekannten Anwendungen von Cyclodextrinen und Cyclodextrinderivaten.
Sie eignen sich insbesondere
- zur Solubilisierung von schwer wasserlöslichen Verbindungen wie beispielsweise Steroiden,
- als Formulierungshilfsmittel in pharmazeutischen, kosmetischen und agrochemischen Produkten,
- zur Stabilisierung von licht-, wärme-, oder oxidationsempfindlichen Stoffen,
- zum Ersatz von organischen Lösungsmitteln insbesondere bei der Trennung und Extraktion von Substanzen aus lipophilen Medien,
- als Hilfsstoffe, insbesondere bei der Beschichtung und/oder Haftvermittlung in der Papier-, Leder- und Textilindustrie,
- als Phasentransfer-Katalysatoren
- sowie zur Geschmacks- und Geruchsmaskierung.

Insbesondere eignen sich die erfindungsgemäß erhaltenen Cyclodextrine als oberflächenaktive Substanzen. Beispielsweise können sie umweltbelastende Tenside in wässrigen Reinigungsgemischen ersetzen. Durch ihre Fähigkeit zur Entfettung und Reinigung von beliebigen Oberflächen (z.B. bei der Metallverarbeitung oder Metallbeschichtung) eignen sich die erfindungsgemäß erhaltenen Cyclodextrine auch für Anwendungen, in denen bisher umweltbelastende organische Lösungsmittel (z.B. halogenierte Kohlenwasserstoffe) Einsatz fanden. Somit sind Reinigungsmittel enthaltend Cyclodextrinderivate wie in Anspruch 5 genannt ein weiterer Gegenstand der vorliegenden Erfindung.

Ferner ermöglichen die erfindungsgemäßen Cyclodextrine in vorteilhafter Weise die Fixierung von Cyclodextrineinheiten über nichtkovalente Wechselwirkungen an beliebigen hydrophoben Materialien wie Polymeren, Polymercompoundierungen, Stoffen und Fasern. Diese Fixierung kann unter Verzicht auf organische Solventien in wäßrigen Medien (z.B. Färbelösungen in der Textilindustrie, Polymerdispersionen, etc.) geschehen.

Die fixierten Cyclodextrin-Einheiten können zur Anbindung von Hilfsstoffen wie z.B. Antioxidentien, Fungiziden, Bakteriziden, UV-Stabilisatoren, etc. dienen und somit die einzusetzenden Stoffmengen dieser Substanzen reduzieren.

Im Fall der Fixierung an hydrophoben Textilmaterialien (z.B. Polyestermaterialien) eignen sich die erfindungsmäßigen Cyclodextrinderivate zur Stoffveredelung, insbesondere zur Verbesserung des Griffverhaltens und des Anschmutzverhaltens sowie zur erhöhten Geruchsabsorption. Somit sind auch Textilveredelungsmittel insbesondere solche für Polyestermaterialien enthaltend Cyclodextrinderivate wie in Anspruch 6 genannt Gegenstand der vorliegenden Erfindung.

Die folgenden Beispiele dienen der weiteren Erläuterung der Erfindung.

In den Beispielen sind Prozentangaben auf das Gewicht bezogen.

### Beispiel 1

### Herstellung von 2-Hydroxypropyl-2-hydroxyhexyl-β-cyclodextrin

14,9 g Natriumhydroxid wurden in 1,60 1 Wasser gelöst und 400 g Hydroxypropyl-β-cyclodextrin (MS:0,77) zugegeben. Bei 80°C wurden 94,1 g 1,2-Epoxyhexan unter Rühren zugetropft und nach beendeter Zugabe weitere 10 h bei dieser Temperatur gerührt. Nach dem Abkühlen wurde der Ansatz durch Zugabe von 2 N Salzsäure neutralisiert. Die neutralisierte Lösung wurde gefriergetrocknet. Eine Probe des erhaltenen Produktes wurde durch Dialyse gegen deionisiertes Wasser gereinigt, gefriergetrocknet und danach analytisch untersucht.
MS (Hydroxypropyl: 0,75, Hydroxyhexyl: 0,41).

### Beispiel 2

### Herstellung von 2-Hydroxypropyl-2-hydroxyhexyl-β-cyclodextrin

0,50 g Natriumhydroxid wurden in 40 ml Wasser gelöst und 10,0 g β-Cyclodextrin darin suspendiert. Bei 25°C wurden 2,90 g Epoxypropan und 3,10 g 1,2-Epoxyhexan zugegeben und 2 h bei 30°C gerührt. Danach wurde die Temperatur des Ansatzes auf 80°C erhöht und weitere 3 h bei dieser Temperatur gerührt. Nach dem Abkühlen wurde mit 2 N Salzsäure neutralisiert, durch Dialyse gereinigt, und danach gefriergetrocknet.
Ausbeute 12,5 g, MS (Hydroxypropyl: 0,64, Hydroxyhexyl: 0,39).

### Beispiel 3

### Herstellung von 2-Hydroxypropyl-2-hydroxyhexyl-β-cyclodextrin

1,00 g Natriumhydroxid wurden in 80 ml Wasser gelöst und 20,0 g β-Cyclodextrin darin suspendiert. Bei 25°C wurden 2,80 g Epoxypropan zugegeben und 2 h bei 25°C gerührt. Die Reaktionstemperatur wurde danach auf 80°C erhöht und 5,60 g 1,2-Epoxyhexan zugetropft. Nach beendeter Zugabe wurde weitere 8 h bei 80° C gerührt und danach bei 25°C durch Zugabe von 2 N Salzsäure neutralisiert. Danach wurde der Ansatz durch Dialyse gereinigt und danach gefriergetrocknet.
Ausbeute 21,5 g, MS (Hydroxypropyl: 0,20; Hydroxyhexyl: 0,39).

### Beispiel 4

### Herstellung von 2-Hydroxypropyl-2-hydroxyhexyl-α-cyclodextrin

0,50 Natriumhydroxid wurden in 40 ml Wasser gelöst und 10,0 g α-Cyclodextrin darin gelöst. Bei 25°C wurden 2,90 g Epoxypropan und 3,90 g 1,2-Epoxyhexan zugegeben und 2 h bei 30°C gerührt. Danach wurde die Temperatur des Ansatzes auf 80°C erhöht und weitere 4 h bei dieser Temperatur gerührt. Nach dem Abkühlen wurde mit 2 N Salzsäure neutralisiert, durch Dialyse gereinigt, und danach gefriergetrocknet.
Ausbeute: 14,5 g, MS (Hydroxypropyl: 0,44, Hydroxyhexyl: 0,34).

### Beispiel 5

### Herstellung von 2-Hydroxypropyl-2-hydroxyhexyl-7-cyclodextrin

0,50 g Natriumhydroxid wurden in 40 ml Wasser gelöst und 10,0 g γ-Cyclodextrin darin gelöst. Bei 25°C wurden 2,90 g Epoxypropan und 3,90 g 1,2-Epoxyhexan zugegeben und 2 h bei 30°C gerührt. Danach wurde die Temperatur des Ansatzes auf 80°C erhöht und weitere 3 h bei dieser Temperatur gerührt. Nach dem Abkühlen wurde mit 2 N Salzsäure neutralisiert, durch Dialyse gereinigt, und danach gefriergetrocknet.
Ausbeute: 15,0 g, MS (Hydroxypropyl: 0,46, Hydroxyhexyl: 0,40).

### Beispiel 6

### Herstellung von 2,3-Dihydroxypropyl-2-hydroxyhexyl-β-cyclodextrin

In einer Lösung von 19,7 g Natriumhydroxid in 2,00 l Wasser wurden 400 g β-Cyclodextrin suspendiert und bei einer Temperatur von 80°C 91,0 g 2,3-Epoxy-1-propanol unter Rühren zugetropft. Nach einer Reaktionszeit von 6 h wurde bei dieser Temperatur 123 g 1,2-Epoxyhexan zugetropft und weitere 8 h bei 80°C gerührt. Nach dem Abkühlen wurde durch Zugabe von 2 N Salzsäure neutralisiert. Die neutralisierte Lösung wurde gefriergetrocknet. Eine Probe des erhaltenen Produktes wurde durch Dialyse gegen deionisiertes Wasser gereinigt, gefriergetrocknet und danach analytisch untersucht.
MS (Dihydroxypropyl: 0,38, Hydroxyhexyl: 0,40).

### Beispiel 7

### Herstellung von Carboxymethyl-2-hydroxyhexyl-β-cyclodextrinnatriumsalz

18,4 g Natriumhydroxid wurden in 1,60 l Wasser gelöst und 400 g Carboxymethyl-β-cyclodextrin-natriumsalz (DS 0,6) zugegeben. Bei 80°C wurden unter Rühren 116 g 1,2-Expoxyhexan zugetropft und nach beendeter Zugabe weiter 10 h bei dieser Temperatur gerührt. Nach dem Abkühlen wurde mit 2 N Salzsäure neutralisiert. Die neutralisierte Lösung wurde gefriergetrocknet. Eine Probe des erhaltenen Produktes wurde durch Dialyse gegen deionisiertes Wasser gereinigt, gefriergetrocknet und danach analytisch untersucht.
MS (Carboxymethyl: 0,52, Hydroxyhexyl: 0,37).

### Beispiel 8

### Herstellung von Carboxymethyl-2-hydroxyhexyl-β-cyclodextrinnatriumsalz

In 17 ml Wasser wurden 2,85 g Natriumhydroxid und 20 g β-Cyclodextrin gelöst und bei 25°C 6,20 g Natriumchloracetat zugegeben. Es wurde unter Rühren 2 h auf 60°C und danach 4 h auf 90°C erhitzt, bevor der Ansatz bei 25°C mit 60 ml Wasser verdünnt wurde. Es wurden 0,74 g Natriumhydroxid und 6,20 g 1,2-Epoxyhexan zugegeben und danach 8 h bei 80°C gerührt. Nach dem Abkühlen wurde mit 2 N Salzsäure neutralisiert und durch Dialyse gereinigt.
Ausbeute 18,5 g, MS (Carboxymethyl: 0,35, Hydroxyhexyl: 0,35).

### Beispiel 9

### Herstellung von 2-Hydroxypropyl-(2-hydroxy-3-phenoxypropyl)-β-cyclodextrin

550 g Hydroxypropyl-β-cyclodextrin (MS 0,9) wurden in eine Lösung von 8,00 g Natriumhydroxid in 400 ml Wasser gegeben und bei 80°C unter Rühren 180 g 3-Phenoxy-1-epoxypropan zugetropft. Nach beendeter Zugabe wurde weitere 8 h bei dieser Temperatur gerührt und danach bei 25°C durch Zugabe von 2 N Salzsäure neutralisiert. Flüssige Bestandteile wurden im Vakuum zur Trockene abdestilliert und der Rückstand in 1,0 l Ethanol gelöst. Nach dem Abtrennen von unlöslichen Bestandteilen wurde die ethanolische Lösung in 10,0 l Diethylether gegeben und das ausgefallene Cyclodextrinderivat abgesaugt. Wasserlösliche Anteile wurden mit 6,0 l Wasser extrahiert. Der wäßrige Extrakt wurde gefriergetrocknet. Eine Probe des erhaltenen Produktes wurde durch Dialyse gegen deionisiertes Wasser gereinigt, gefriergetrocknet und danach analytisch untersucht.
MS (Hydroxypropyl: 0,90, 2-Hydroxy-3-phenoxypropyl: 0,35).

### Beispiel 10

### Herstellung von Carboxymethyl-(2-hydroxy-3-phenoxypropyl)-β-cyclodextrin-natriumsalz

500 g Carboxymethyl-β-cyclodextrin-natriumsalz (DS 0,6) wurden in 417 ml 2%iger wäßriger Natronlauge gelöst und bei 80°C unter Rühren 225 g 3-Phenoxy-1-epoxypropan zugetropft. Nach beendeter Zugabe wurde weitere 8 h bei dieser Temperatur gerührt und danach bei 25°C durch Zugabe von 2 N Salzsäure neutralisiert. Die neutralisierte Lösung wurde gefriergetrocknet. Eine Probe des erhaltenen Produktes wurde durch Dialyse gegen deionisiertes Wasser gereinigt, gefriergetrocknet und danach analytisch untersucht.
MS (Carboxymethyl: 0,60, 2-Hydroxy-3-phenoxypropyl: 0,61).

### Beispiel 11

### Herstellung von 2-Hydroxypropyl-(2-hydroxy-3-(2-ethyl-hexyloxy)-propyl)-β-cyclodextrin

550 g Hydroxypropyl-β-cyclodextrin (MS: 0,9) wurden in eine Lösung von 8,00 g Natriumhydroxid in 400 ml Wasser gegeben und bei 80°C unter Rühren 275 g 3-(2-Ethylhexyloxy)-1-epoxypropan zugetropft. Nach beendeter Zugabe wurde weitere 8 h bei dieser Temperatur gerührt und danach bei 25°C durch Zugabe von halbkonzentrierter und 2 N Salzsäure neutralisiert. Flüssige Bestandteile wurden im Vakuum zur Trockne abdestilliert und der Rückstand in 1,0 l Ethanol gelöst. Nach dem Abzentrifugieren von unlöslichen Bestandteilen wurde die ethanolische Lösung in 10,0 l Methyl-tert.-butylether gegebenen und das ausgefallene Cyclodextrinderivat abgesaugt. Wasserlösliche Anteile wurden mit 6,0 l Wasser extrahiert. Der wäßrige Extrakt wurde gefriergetrocknet. Eine Probe des erhaltenen Produktes wurde durch Dialyse gegen deionisiertes Wasser gereinigt, gefriergetrocknet und danach analytisch untersucht.
MS (Hydroxypropyl: 0,90, 2-Hydroxy-3-(2-ethylhexyloxy)propyl: 0,23).

### Beispiel 12

### Herstellung von 2,3-Dihydroxypropyl-(2-hydroxy-3-(2-ethylhexyloxy)-propyl)-β-cyclodextrin

Zu einer Lösung von 40,0 g Natriumhydroxid in 800 ml Wasser wurden 550 g β-Cyclodextrin gegeben und bei 25°C unter Rühren 165 ml 3-Hydroxy-1-epoxypropan zugetropft. Es wurde nach beendeter Zugabe 3 h bei 40°C gerührt und danach bei dieser Temperatur 210 g 3-(2-Ethylhexyloxy)-1-epoxypropan zugegeben. Danach wurde unter Rühren 3 h auf 80°C erhitzt. Nach dem Abkühlen wurde bei 25°C durch Zugabe von halbkonzentrierter und 2 N wäßriger Salzsäure neutralisiert und danach das Lösungsmittel sowie flüchtige Bestandteile im Vakuum abgezogen. Der Rückstand wurde mit 1,0 l Ethanol extrahiert und die erhaltene ethanolische Lösung nach Filtration in 10,0 1 Methyl-tert.-butylether gegeben. Das ausgefällte Cyclodextrinderivat wurde abzentrifugiert und in 6,0 l 80°C heißem Wasser gelöst. Ungelöste Bestandteile wurden abfiltriert und die verbliebene Lösung gefriergetrocknet.
Ausbeute: 350 g, MS (2,3-Dihydroxypropyl: 0,60, 2-Hydroxy-3-(2-ethylhexyloxy)-propyl: 0,34).

### Beispiel 13

### Herstellung von Carboxymethyl-(2-hydroxy-3-(2-ethylhexyloxy)-propyl)-β-cyclodextrin-natriumsalz

500 g Carboxymethyl-β-cyclodextrin-natriumsalz (DS 0,6) wurden in 417 ml 2%iger wäßriger Natronlauge gelöst und bei 80°C unter Rühren 444 g 3-(2-Ethylhexyloxy)-1-epoxypropan zugetropft. Nach beendeter Zugabe wurde weitere 8 h bei dieser Temperatur gerührt und danach bei 25°C durch Zugabe von konzentrierter und 2 N wäßriger Salzsäure neutralisiert. Die erhaltene Lösung wurde zweimal mit 1,0 l Diethylether gewaschen und danach gefriergetrocknet. Eine Probe des erhaltenen Produktes wurde durch Dialyse gegen deionisiertes Wasser gereinigt, gefriergetrocknet und danach analytisch untersucht.
MS (Carboxymethyl: 0,60, 2-Hydroxy-3-(2-ethylhexyloxy)propyl:0,41).

### Beispiel 14

### Herstellung von 2-Hydroxypropyl-(2-hydroxy-3-butyloxypropyl)-β-cyclodextrin

165 g β-Cyclodextrin wurden in 240 ml 5%iger wäßriger Natronlauge gelöst und bei 25°C 51,0 ml Propenoxid unter Rühren zugegeben. Nach beendeter Zugabe wurde 3 h bei 35°C gerührt und danach 0,5 h auf 80°C erhitzt. Bei dieser Temperatur wurden unter Rühren 48,8 g 3-Butyloxy-1-epoxypropan zugegeben und weitere 3 h gerührt. Nach beendeter Reaktion wurde bei 25°C durch Zugabe von halbkonzentrierter und 2 N Salzsäure neutralisiert und danach flüchtige Bestandteile im Vakuum abdestilliert. Der Rückstand wurde in 300 ml Methanol gelöst und unlösliche Bestandteile abzentrifugiert. Die methanolische Lösung wurde in 3,0 l Diethylether eingerührt und das ausgefällte Cyclodextrinderivat abgesaugt und im Vakuum getrocknet.
Ausbeute: 200 g, MS (Hydroxypropyl: 0,63, 2-Hydroxy-3-butyloxypropyl: 0,32).

### Beispiel 15

### Herstellung von Methyl-(2-hydroxyhexyl)-β-cyclodextrin

0,50 g Natriumhydroxid wurden in 40 ml Wasser gelöst und 12,0 g Methyl-β-cyclodextrin (MS: 0,6) darin suspendiert. Bei 25°C wurden 3,70 ml 1,2 Epoxyhexan zugegeben und 6 h bei 80°C gerührt. Nach dem Abkühlen wurde mit 2 N Salzsäure neutralisiert, durch Dialyse gereinigt, und danach gefriergetrocknet.
Ausbeute: 10,6 g, MS (Methyl: 0,60, Hydroxyhexyl: 0,34).

### Beispiel 16

### Herstellung von 2-Hydroxypropyl-(2-hydroxyoctyl)-β-cyclodextrin

11,0 g β-Cyclodextrin wurden in 16,0 ml 5 %iger wäßriger Natronlauge gelöst und bei 25°C 3,40 ml Epoxypropan zugegeben. Nach beendeter Zugabe wurde 3 h bei 35°C gerührt und danach bei dieser Temperatur 3,80 ml 1,2-Epoxyoctan zugegeben. Danach wurde die Temperatur des Ansatzes auf 80°C erhöht und weitere 3 h bei dieser Temperatur gerührt. Nach dem Abkühlen wurde mit 2 N Salzsäure neutralisiert und flüchtige Komponenten im Vakuum abgezogen. Der Rückstand wurde in 50 ml Methanol aufgenommen und das Cyclodextrinderivat nach Filtration durch Einrühren in 300 ml Methyl-tert.-butylether ausgefällt. Der Niederschlag wurde mit 100 ml Wasser extrahiert, unlösliche Anteile durch Filtration abgetrennt und danach durch Dialyse gereinigt.
Ausbeute: 12,0 g, MS (Hydroxypropyl: 0,64, Hydroxyoctyl: 0,29).

### Beispiel 17

### Herstellung von Carboxymethyl-(2-hydroxydecyl)-β-cyclodextrin-natriumsalz

13,8 g Carboxymethyl-β-cyclodextrin-natriumsalz (DS 0,6) wurden in 16,0 ml 5%iger wäßriger Natronlauge gelöst und bei 30-40°C unter Rühren 3,90 g 1,2-Epoxydecan zugetropft. Nach beendeter Zugabe wurde weitere 8 h bei 80°C gerührt und danach bei 25°C durch Zugabe von 2 N wäßriger Salzsäure neutralisiert. Die erhaltene Lösung wurde durch Dialyse gereinigt.
Ausbeute: 14,0 g, MS (Carboxymethyl: 0,60, 2-Hydroxydecyl: 0,19).

### Beispiel 18

### Herstellung von 2-Hydroxypropyl-(2-hydroxy-3-(o-kresyloxy)propyl)-β-cyclodextrin

13,0 g Carboxymethyl-β-cyclodextrin-natriumsalz (DS 0,6) wurden bei 25°C in 16,0 ml 5%iger wäßriger Natriumhydroxidlösung gelöst. Bei 25°C wurden 3,80 g 3-ortho-Kresyloxy-1-epoxypropan zugegeben und 6 h bei 80°C gerührt. Nach dem Abkühlen wurde mit 2 N Salzsäure neutralisiert, durch Dialyse gereinigt und danach gefriergetrocknet.
Ausbeute: 14,0 g, MS (Carboxymethyl: 0,60, 2-Hydroxy-3-(o-kresyloxy)-propyl: 0,26).

### Beispiel 19

### 2-Hydroxypropyl-(2-hydroxy-3-octyloxypropyl)-β-cyclodextrin

11,0 g β-Cyclodextrin wurden in 16,0 ml 5%iger wäßriger Natronlauge gelöst und bei 25°C 3,40 ml Epoxypropan und 4,70 g 3-Octyloxy-1-epoxypropan zugegeben. Nach beendeter Zugabe wurde 2 h bei 35°C gerührt und danach die Temperatur des Ansatzes auf 80°C erhöht. Es wurde weitere 3 h bei dieser Temperatur gerührt und nach dem Abkühlen mit 2 N Salzsäure neutralisiert. Der Ansatz wurde durch Dialyse gereinigt und danach gefriergetrocknet.
Ausbeute: 12,0 g, MS (Hydroxypropyl: 0,60, 2-Hydroxy-3-octyloxy-propyl: 0,36).

In den folgenden Beispielen 20 bis 22 werden die vorteilhaften Eigenschaften der erfindungsgemäßen Cyclodextrinderviate mit denen bekannter Cyclodextrinderivate verglichen. Die bekannten Derivate 2-Hydroxypropyl-β-cyclodextrin (MS=0,60), 2,3-Dihydroxy-β-cyclodextrin (MS=0,6), Carboxymethyl-β-cyclodextrin-natriumsalz (MS=0,55) sowie 2-Hydroxyhexyl-β-cyclodextrin (MS=0,35) wurden in Analogie zu den bisher aufgeführten Beispielen hergestellt, wobei auf die Zugabe des zweiten Alkylierungsmittels verzichtet wurde.

Im folgenden aufgeführte und bisher nicht beschriebene wasserlösliche lipophil substituierte Mischether wurden in Analogie zu den Beispielen 1 bis 19 hergestellt.

### Beispiel 20

### Bestimmung und Vergleich der Wasserlöslichkeit verschiedener Cyclodextrinderivate

Die Wasserlöslichkeit der erfindungsgemäßen lipophil und hydrophil substituierten Mischether und des ausschließlich lipophil substituierten Cyclodextrinderivates wurde bei 25°C durch Rückstandsbestimmung nach Lösungsmittelentzug aus gesättigten Lösungen bestimmt.

In Tabelle 1 wird die Wasserlöslichkeit bei 25°C 2-hydroxyhexyl-substituierter β-Cyclodextrinmischether mit 2-hydroxyhexyliertem β-Cyclodextrin verglichen. Die erfindungsgemäßen Mischether zeichnen sich bei 25°C durch eine zum Teil mehr als zwanzigfache Löslichkeit in Wasser aus.

**Tabelle 1**

| R₁/MS | R₂/MS | Wasserlöslichkeit/Gew.-% |
|---|---|---|
| - | 2-Hydroxyhexyl/0,35 | ca. 2,5 |
| | | |
| Methyl/0,60 | 2-Hydroxyhexyl/0,34 | >40 |
| | | |
| 2-Hydroxypropyl/0,75 | 2-Hydroxyhexyl/0,41 | >50 |
| | | |
| 2,3-Dihydroxypropyl/0,38 | 2-Hydroxyhexyl/0,40 | >50 |
| | | |
| Na-Carboxymethyl/0,35 | 2-Hydroxyhexyl/0,35 | >50 |

### Beispiel 21

### Bestimmung und Vergleich der Oberflächenspannung verschiedener Cyclodextrinderivate

Die Bestimmung der Oberflächenspannung wurde mit einem Digital Tensiometer K10 (Fa. Krüss) in 0,5 %-igen wässrigen Lösungen der Derivate durchgeführt.

In Tabelle 2 werden Oberflächenspannungen (OSP) von 0,5 %-igen wäßrigen Lösungen der erfindungsgemäßen lipophil substituierten Mischether im Vergleich zu ausschließlich lipophil substituierten Derivaten exemplarisch anhand einiger 2-hydroxyhexylsubstituierter β-Cyclodextrinderivate verglichen.
Die Verbindungen zeichnen sich bei 25°C durch Oberflächenspannungen, die deutlich unterhalb derjenigen von 2-hydroxyhexyliertem β-Cyclodextrin liegen, aus.

**Tabelle 2**

| R₁/MS | R₂/MS | OSP mN*m⁻¹ |
|---|---|---|
| - | 2-Hydroxyhexyl/0,35 | 43,8 |
| | | |
| Methyl/0,60 | 2-Hydroxyhexyl/0,34 | 35,6 |
| | | |
| 2-Hydroxypropyl/0,75 | 2-Hydroxyhexyl/0,41 | 31,8 |
| | | |
| 2,3-Dihydroxypropyl/0,38 | 2-Hydroxyhexyl/0,40 | 35,8 |
| | | |
| Na-Carboxymethyl/0,35 | 2-Hydroxyhexyl/0,35 | 34,1 |

Tabelle 3 liefert einen Vergleich der Oberflächenspannungen (OSP) von 0,5%igen wäßrigen Lösungen einiger erfindungsgemäßer lipophil substituierter β-Cyclodextrinderivate mit bekannten wasserlöslichen Cyclodextrinderivaten. Die Oberflächenspannungen der gut wasserlöslichen Mischether (in der Regel oberhalb 30 Gew.-%) liegen in allen Fällen deutlich unter den Werten der Cyclodextrinderivate ohne lipophile Substituenten.

**Tabelle 3**

| R₁/MS | R₂/MS | OSP mN*m⁻¹ |
|---|---|---|
| 2-Hydroxypropyl/0,60 | ---- | 58,2 |
| 2,3-Dihydroxypropyl/0,55 | ---- | 69,5 |
| Na-Carboxymethyl/0,60 | ---- | 60,1 |
| 2-Hydroxypropyl/0,75 | 2-Hydroxyhexyl/0,41 | 31,8 |
| 2,3-Dihydroxypropyl/0,38 | 2-Hydroxyhexyl/0,40 | 35,8 |
| Na-Carboxymethyl/0,35 | 2-Hydroxyhexyl/0,35 | 34,1 |
| Methyl/0,60 | 2-Hydroxyhexyl/0,34 | 35,6 |
| 2-Hydroxypropyl/0,64 | 2-Hydroxyoctyl/0,29 | 34,3 |
| Na-Carboxymethyl/0,60 | 2-Hydroxydecyl/0,19 | 34,2 |
| 2-Hydroxypropyl/0,32 | 2-Hydroxy-3-(butyloxy)-propyl/0,63 | 43,0 |
| Na-Carboxymethyl/0,60 | 2-Hydroxy-3-(octyloxy)-propyl/0,36 | 29,8 |
| 2-Hydroxypropyl/0,56 | 2-Hydroxy-3-(2-ethylhexyloxy)-propyl/0,28 | 29,2 |
| Na-Carboxymethyl/0,60 | 2-Hydroxy-3-(2-ethylhexyloxy)-propyl/0,41 | 35,3 |
| Na-Carboxymethyl/0,60 | 2-Hydroxy-3-(phenyloxy)-propyl/0,61 | 40,7 |
| 2-Hydroxypropyl/0,60 | 2-Hydroxy-3-(o-kresyloxy)-propyl/0,30 | 37,5 |
| Na-Carboxymethyl/0,60 | 2-Hydroxy-3-(o-kresyloxy)-propyl/0,26 | 45,7 |

## Patentansprüche

1. Wasserlösliche Mischether des α, β, oder γ-Cyclodextrins mit mindestens einem lipophilen und einem hydrophilen Rest pro Cyclodextrinmolekül, der folgenden Formel: 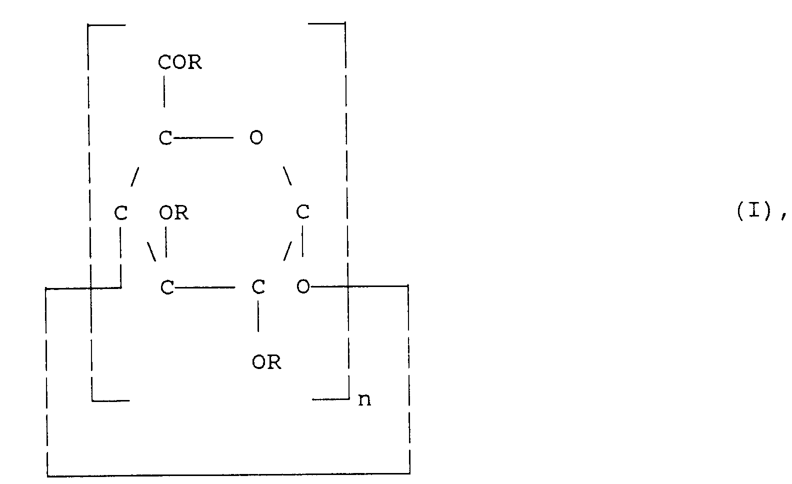 wobei
R Wasserstoff oder R1 oder R2 bedeutet und
R1 gleich oder verschieden ist und Methyl, Ethyl, Hydroxyethyl, Hydroxy-i-propyl, Hydroxy-n-propyl, Dihydroxy-i-propyl, Dihydroxy-n-propyl, Carboxymethyl, Carboxyethyl, Carboxy-i-propyl, Carboxy-n-propyl oder ein Alkalisalz der Carboxyalkylsubstituenten und R2 gleich oder verschieden ist und C₅-C₁₂ Hydroxyalkyl, C₆-C₁₀ Hydroxycycloalkyl, mit C₄-C₁₂ Alkyloxy, und/oder C₆-C₁₀ Aryloxy, und/oder C₇-C₁₅ Aralkyloxyresten substituiertes Hydroxypropyl bedeutet, wobei die Alkylreste unverzweigt oder verzweigt sein können und der MS für R1 0,3 bis 1,0 beträgt und der MS für R2 0,2 bis 0,6 beträgt und n 6, 7 oder 8 bedeutet.

2. Wasserlösliche Mischether gemäß Formel I, dadurch gekennzeichnet, daß
R1 gleich oder verschieden ist und Methyl, 2-Hydroxypropyl, 2,3-Dihydroxypropyl, Na-Carboxymethyl, K-Carboxymethyl, Li-Carboxymethyl bedeutet und
R2 gleich oder verschieden ist und Hydroxyhexyl, Hydroxyoctyl, Hydroxydecyl, Hydroxycyclohexyl, Hydroxycyclooctyl, 3-Butoxy-hydroxypropyl, 3-Hexyloxy-hydroxypropyl, 3-(2-Ethylhexyloxy)-hydroxypropyl, 3-Octyloxyhydroxypropyl, 3-Phenyloxy-hydroxypropyl, 3-Kresyloxyhydroxypropyl, 3-Naphthyloxy-hydroxypropyl bedeutet, wobei die Alkylreste unverzweigt und geradzahlig sind.

3. Wasserlösliche Mischether gemäß Anspruch 1 und/oder 2, dadurch gekennzeichnet, daß n 7 bedeutet.

4. Verfahren zur Herstellung von Cyclodextrinmischethern nach Anspruch 1 und/oder 2, dadurch gekennzeichnet, daß α-, β- oder γ-Cyclodextrin einzeln oder in beliebiger Mischung in einem basischen flüssigen Reaktionsmedium mit mindestens einem Veretherungsmittel, welches zu lipophilen Substituenten am Cyclodextrin führt, und mindestens einem Veretherungsmittel, welches zu hydrophilen Substituenten am Cyclodextrin führt, umgesetzt wird.

5. Reinigungsmittel enthaltend wasserlösliche Mischether gemäß Anspruch 1.

6. Textilveredelungsmittel enthaltend wasserlösliche Mischether gemäß Anspruch 1.

7. Verwendung von Cyclodextrinderivaten nach Anspruch 1 und/oder 2
- zur Solubilisierung von schwer wasserlöslichen Verbindungen wie beispielsweise Steroiden,
- als Formulierungshilfsmittel in pharmazeutischen, kosmetischen und agrochemischen Produkten,
- zur Stabilisierung von licht-, wärme-, oder oxidationsempfindlichen Stoffen,
- zum Ersatz von organischen Lösungsmitteln insbesondere bei der Trennung und Extraktion von Substanzen aus lipophilen Medien,
- als Hilfsstoffe, insbesondere bei der Beschichtung und/oder Haftvermittlung in der Papier-, Leder- und Textilindustrie,
- als Phasentransfer-Katalysator
- sowie zur Geschmacks- und Geruchsmaskierung.

8. Verwendung von wasserlöslichen Mischethern gemäß Anspruch 1 als oberflächenaktive Substanzen..

## Claims

1. Water-soluble mixed ethers of α-, β- or γ-cyclodextrin with at least one lipophilic and one hydrophilic radical per cyclodextrin molecule, of the following formula: 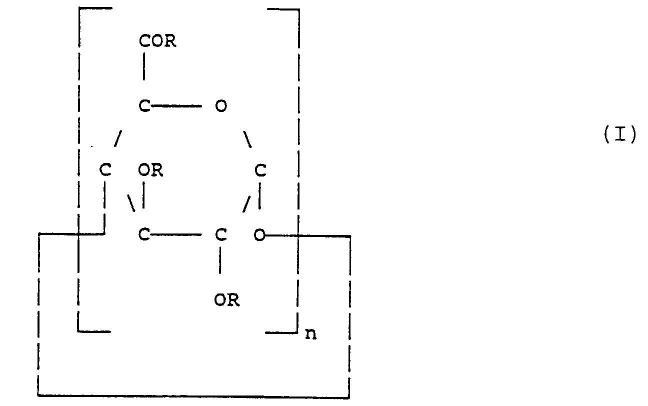 where
R is hydrogen or R1 or R2 and
R1 is identical or different and is methyl, ethyl, hydroxyethyl, hydroxy-i-propyl, hydroxy-n-propyl, dihydroxy-i-propyl, dihydroxy-n-propyl, carboxymethyl, carboxyethyl, carboxy-i-propyl, carboxy-n-propyl or an alkali metal salt of the carboxyalkyl substituents, and R2 is identical or different and is C₅-C₁₂ hydroxyalkyl, C₆-C₁₀ hydroxycycloalkyl, or hydroxypropyl which is substituted by C₄-C₁₂ alkyloxy and/or C₆-C₁₀ aryloxy and/or C₇-C₁₅ aralkyloxy radicals, where the alkyl radicals can be unbranched or branched and the MS for R1 is 0.3 to 1.0 and the MS for R2 is 0.2 to 0.6 and n is 6, 7 or 8.

2. Water-soluble mixed ethers according to formula I, characterized in that
R1 is identical or different and is methyl, 2-hydroxypropyl, 2,3-dihydroxypropyl, Nacarboxymethyl, K-carboxymethyl or Li-carboxymethyl and
R2 is identical or different and is hydroxyhexyl, hydroxyoctyl, hydroxydecyl, hydroxycyclohexyl, hydroxycyclooctyl, 3-butoxy-hydroxypropyl, 3-hexyloxyhydroxypropyl, 3-(2-ethylhexyloxy)-hydroxypropyl, 3-octyloxyhydroxypropyl, 3-phenyloxy-hydroxypropyl, 3-cresyloxyhydroxypropyl or 3-naphthyloxy-hydroxypropyl, where the alkyl radicals are unbranched and even-numbered.

3. Water-soluble mixed ethers according to Claim 1 and/or 2, characterized in that n is 7.

4. Process for the preparation of cyclodextrin mixed ethers according to Claim 1 and/or 2, characterized in that α-, β- or γ-cyclodextrin, individually or in any desired mixture, is reacted in a basic liquid reaction medium with at least one etherifying agent which leads to lipophilic substituents on the cyclodextrin and at least one etherifying agent which leads to hydrophilic substituents on the cyclodextrin.

5. Cleaning compositions comprising water-soluble mixed ethers according to Claim 1.

6. Textile finishing compositions comprising water-soluble mixed ethers according to Claim 1.

7. Use of cyclodextrin derivatives according to Claim 1 and/or 2,
- for solubilizing sparingly water-soluble compounds, such as, for example, steroids,
- as a formulation auxiliary in pharmaceutical, cosmetic and agrochemical products,
- for stabilizing substances which are sensitive to light, heat or oxidation,
- for replacing organic solvents, in particular in the separation and extraction of substances from lipophilic media,
- as an auxiliary, in particular for coating and/or adhesion promotion in the paper, leather and textile industry,
- as a phase transfer catalyst
- and for masking flavour and odour.

8. Use of water-soluble mixed ethers according to Claim 1 as surface-active substances.

## Revendications

1. Ethers mixtes hydrosolubles de la α-, β-, ou γ-cyclodextrine ayant au moins un radical lipophile et un radical hydrophile par molécule de cyclodextrine, de formule suivante : 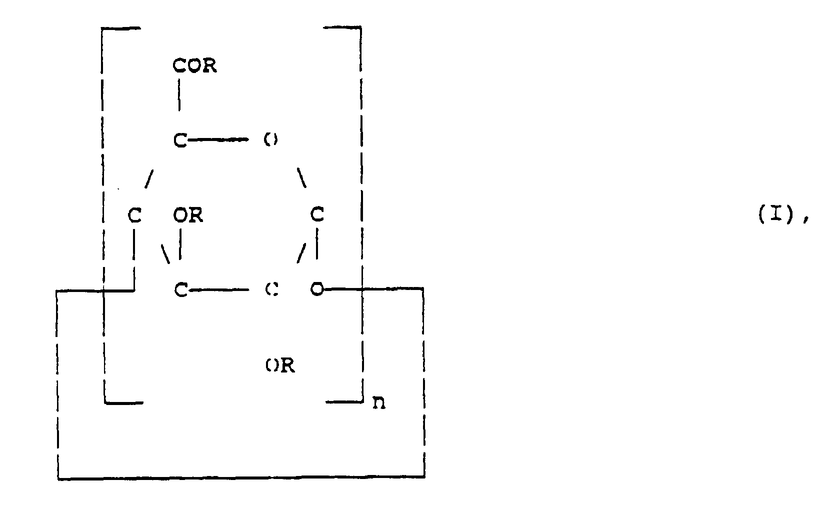 dans laquelle
R est un hydrogène ou représente R¹ ou R² et
R¹ est identique ou différent et représente, un méthyle, un éthyle, un hydroxyéthyle, un hydroxy-isopropyle, un hydroxy-n-propyle, un dihydroxy-isopropyle, un dihydroxy-n-propyle, un carboxyméthyle, un carboxyéthyle, un carboxy-isopropyle, un carboxy-n-propyle ou un sel de métal alcalin des substituants carboxyalkyle et R² est identique ou différent et représente un hydroxyalkyle en C₅-C₁₂, un hydroxycycloalkyle en C₆-C₁₀, un hydroxypropyle substitué par des radicaux alkyloxy en C₄-C₁₂ et/ou aryloxy en C₆-C₁₀ et/ou aralkyloxy en C₇-C₁₅ où les radicaux alkyle peuvent être non ramifiés ou ramifiés, et le SM pour R¹ est de 0,3 à 1,0 et le SM pour R² est de 0,2 à 0,6 et n vaut 6, 7 ou 8.

2. Ethers mixtes hydrosolubles de formule I, caractérisés en ce que
R¹ est identique ou différent et représente un méthyle, un 2-hydroxypropyle, un 2,3-dihydroxypropyle, un Na-carboxyméthyle, un K-carboxyméthyle, un Li-carboxyméthyle et
R² est identique ou différent et représente un hydroxyéthyle, un hydroxyoctyle, un hydroxydécyle, un hydroxycyclohexyle, un hydroxycyclo-octyle, un 3-butoxyhydroxypropyle, un 3-hexyloxyhydroxypropyle, un 3-(2-éthylhexyloxy)hydroxypropyle, un 3-octyloxyhydroxypropyle, un 3-phényloxyhydroxypropyle, un 3-crésyloxyhydroxypropyle, un 3-naphtyloxyhydroxypropyle, les radicaux alkyle étant non ramifiés et d'ordre pair.

3. Ethers mixtes hydrosolubles selon la revendication 1 et/ou 2, caractérisés en ce que n vaut 7.

4. Procédé de préparation d'éthers mixtes de cyclodextrine selon la revendication 1 et/ou 2, caractérisé en ce que la α-, la β- ou la γ-cyclodextrine, individuellement ou en mélange quelconque, est mise à réagir dans un milieu réactionnel liquide basique avec au moins un agent d'éthérification qui conduit à des substituants lipophiles sur la cyclodextrine et au moins un agent d'éthérification qui conduit à des substituants hydrophiles sur la cyclodextrine.

5. Compositions nettoyantes contenant des éthers mixtes hydrosolubles selon la revendication 1.

6. Compositions d'apprêtage textile contenant des éthers mixtes hydrosolubles selon la revendication 1.

7. Utilisation de dérivés de cyclodextrine selon la revendication 1 et/ou 2,
- pour la solubilisation de composés peu hydrosolubles, tels que, par exemple, des stéroïdes,
- en tant qu'auxiliaires de formulation dans des produits pharmaceutiques, cosmétiques et agrochimiques,
- pour la stabilisation de substances sensibles à la lumière, à la chaleur ou à l'oxydation,
- pour remplacer des solvants organiques, en particulier lors de la séparation et l'extraction de substances de milieux lipophiles,
- en tant qu'auxiliaires, en particulier pour le revêtement et/ou la promotion de l'adhésion dans l'industrie du papier, du cuir et du textile,
- en tant que catalyseur à transfert de phase,
- et pour masquer des goûts et des odeurs.

8. Utilisation d'éthers mixtes hydrosolubles selon la revendication 1, en tant que substances tensioactives.
